Europäisches Patentamt

European Patent Office

Office européen des brevets

(11) Publication number: **0 122 328**
**B1**

## (12) EUROPEAN PATENT SPECIFICATION

(45) Date of publication of patent specification: **25.03.87**

(21) Application number: **83111916.9**

(22) Date of filing: **14.05.79**

(60) Publication number of the earlier application in accordance with Art. 76 EPC: **0 030 230**

(51) Int. Cl.⁴: **F 04 D 29/44, F 04 D 29/42**

(54) **Compressor housing for a turbocharger and a method of producing such housing.**

(43) Date of publication of application:
**24.10.84 Bulletin 84/43**

(45) Publication of the grant of the patent:
**25.03.87 Bulletin 87/13**

(84) Designated Contracting States:
**DE FR**

(56) References cited:
**DE-A-2 437 530**
**FR-A-2 197 420**
**GB-A- 817 013**
**GB-A-1 092 558**
**GB-A-1 095 898**
**GB-A-1 263 932**
**US-A-3 068 638**
**US-A-3 071 313**
**US-A-3 489 340**

(73) Proprietor: **OSBORN, Norbert L.**
**151 Regal Row Suite 120**
**Dallas TX 75247 (US)**

(72) Inventor: **OSBORN, Norbert L.**
**151 Regal Row Suite 120**
**Dallas TX 75247 (US)**

(74) Representative: **UEXKÜLL & STOLBERG**
**Patentanwälte**
**Beselerstrasse 4**
**D-2000 Hamburg 52 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The present invention relates to compressor housing for a turbocharger and a method of producing such housing.

The present design and method of production of prior art compressor housings for turbochargers have presented a considerable problem.

Centrifugal flow compressors are one of the most widely used dynamic compressors in turbochargers. In this compressor type, air or an air-fuel mixture enters the compressor inlet, is channeled to the compressor rotor and is accelerated to near sonic speeds at a right angle to the inlet flow path. Increase in air pressure is accomplished by reducing the velocity of the accelerated gases as discharged from the tip of the compressor rotor blades. This process, known as diffusion, is more efficiently achieved by slowing down the gases without turbulence so that a large percentage of the velocity energy is converted into pressure energy, raising the static pressure.

To facilitate this diffusion process, turbochargers employing centrifugal compressors have normally included a compressor rotor wall closely following the contour of the compressor rotor blades from the blade leading edge to its outer tip. This compressor wall then extends past the outer tip of the blade to form one of two walls of the diffuser, then terminates to provide a circumferential gap through which the compressed gases are channeled into a circumferential chamber leading to the intake manifold of the engine. This wall, facing the compressor rotor blades and closely contoured to the rotor blades then extending outward, uniformly decreases the velocity of the gases after the gases leave the rotor blades and prior to their entry into the chamber leading to the engine. Thus, this wall structure greatly increases the static pressure generated by the compressor.

To form this structure, most turbocharger compressor housings have been sand-cast with the compressor wall cast in one piece with the compressor outer surround housing. This has normally been accomplished by using a sand core to form the circumferential chamber leading to the intake manifold of the engine. After casting, this sand core is dislodged to produce the chamber on the opposite side of the wall from the compressor in which gases are channeled off of the tips of the compressor rotor.

Although die-casting of the compressor housing would be substantially less expensive and more accurate than sand-casting, die-casting of an optimum design has not been possible because of the inability to use die-cast molds to form the circumferential chamber which channels the compressor gases to the intake manifold of the engine and at the same time from the diffuser wall. Because the variable area chamber is necessarily larger than the inlet gap through which gases are injected from the compressor rotor blades, die-casting an optimum design compressor housing has not been possible because of the inability to design molds that would form this passageway behind the wall facing the blades of the compressor rotor.

Where die-cast compressor housings are used, the wall normally formed in sand-cast compressor housings is merely deleted so that the molds may be brought together and parted to form the casting. However, without this wall, gases accelerated by the compressor rotor are prematurely dumped from the diffuser into the circumferential chamber leading into the engine intake manifold. As a result, this arrangement realizes a substantially lower compressor efficiency and thus lower performance.

In US—A—3 489 380 a compressor housing is described having a compressor wall forming part of a diffuser passage. Such compressor housing is mounted on a backplate with machined, mating surfaces of the housing and of the backplate in engagement with each other. The backplate, the compressor wall forming part of the diffuser passage and the mating surfaces are arranged coaxially in relation to the compressor axis and have a constant diameter. In view of the shape of the surfaces it is not only difficult to die-cast the components but in addition the prior compressor housing is suitable for a certain type of turbocharger only, i.e. if different flow characteristics of the compressor are required the entire compressor housing must be substituted.

It is an object of the invention to provide for compressor housing for a turbocharger with a compressor wall which housing can be produced by die-casting and which can easily be adapted to different flow characteristics.

To solve such object a compressor housing for a turbocharger with an inlet port and a circumferential chamber surrounding said inlet port and leading to a compressor exhaust port in which housing, in use, a compressor rotor is rotatably mounted for compressing air entering the inlet port and discharging the compressor air into the chamber for exhaust through the exhaust port, the outer housing defining the inlet port and the circumferential chamber around the inlet port and a wall insert including a tubular throat for engagement within the inlet port and a disc attached transversely at one end of the tubular throat, the disc having an aperture corresponding to the opening of the throat, is characterized by the inlet port having an inside surface with a first portion remote from the disc having a varying diameter converging toward the disc and a second portion adjacent the disc diverging in diameter toward the disc and the tubular throat having an inside surface converging in diameter toward the disc and an outside surface diverging in diameter toward the disc the outside surface being arranged to mate with the second portion of the inside surface of the inlet portt and of the outer housing.

The components of the compressor housing according to the invention cannot only easily be produced by di-casting but in addition it is possible to adapt the compressor housing to a different flow characteristics by changing the clearance provided between the tubular throat of the insert and the compressor rotor. This can be achieved by substituting different inserts to provide a large or smaller gap between the throat and the rotor.

As mentioned the wall insert is formed having a tubular throat with a circular disc attached at one end of the tubular throat transverse thereto. The disc has an aperture corresponding to the opening formed by the tubular throat. Rivet-like protrusions may integrally be formed and extend from the disc corresponding to and facing apertures formed in the wall of the compressor housing. These protrusions are circumferentially spaced around the tubular throat and correspond in position to the apertures formed around the inlet port in the transverse wall of the compressor housing. The protrusions engage the apertures to join the insert to the compressor housing such that the circular disc forms a forward diffuser wall of the turbocharger.

The tubular throat of the insert fits within the inlet port allowing the circular disc to abut the transverse wall of the compressor housing for engagement thereto. The disc extends beyond the transverse wall and partially encloses the opening in the plane of the wall of the circumferential chamber.

In accordance with one embodiment of the invention, the inlet port is formed with an inside surface having a first portion remote from the transverse wall with a varying diameter converging toward the wall and a second portion adjacent the compressor housing transverse wall diverging in diameter toward the wall. The tubular throat of the wall insert has an inside surface converging in diameter toward the circular disc and an outside surface diverging in diameter toward the disc to mate with the diverging inner surface of the inlet port of the compressor housing. The inner surface of the throat portion of the wall insert converges at substantially the same rate as the inlet port inner surface to form a continuous converging surface from the opening into the inlet port to the area adjacent the insert disc where the compressor rotor is positioned.

As is now appreciated, the compressor housing unit consists of two components which are cast separately and joined to form the completed unit. By so doing, the components are designed so that they may be die-cast while still providing a forward diffuser wall for closing the circumferential chamber except for an annular gap through which compressed air is channeled from the blade tips of the compressor rotor.

In accordance with another embodiment of the invention, the housing unit further includes a bearing support cylinder positioned from the inner wall of the inlet port by a plurality of vanes extending from the inner wall. The vanes are aligned to be substantially radial from the center line of the inlet port with a leading edge facing the opening to the inlet port and a trailing edge substantially opposite the leading edge. The leading and trailing edges are separated by thicker intermediate vane sections.

In accordance with still another embodiment of the invention, one end of the tubular throat of the compressor wall insert is notched to correspond with the vanes such that the throat straddles the vanes when the tubular throat is inserted within the inlet port.

For a more complete understanding of the present invention, and for further details and advantages thereof, reference is now made to the following description taken in conjunction with the accompanying drawings, in which:

FIGURE 1 is a perspective view of the turbocharger of the present invention;

FIGURE 2 is a vertical section taken along lines 2—2 of the turbocharger illustrated in FIGURE 1;

FIGURE 3 is an exploded perspective view showing the two components of the compressor housing unit separated from molds used to make the components,

FIGURE 4 is a frontal view looking into the inlet port of the turbocharger illustrated in FIGURE 1,

FIGURE 5 is a section view taken along line 5—5 of FIGURE 4,

FIGURE 6 is a section view taken along line 6—6 of FIGURE 4,

FIGURE 7 is a section view taken along line 7—7 of FIGURE 4,

FIGURE 8 illustrates an alternative embodiment of the present invention wherein the forward diffuser wall is modified to modify the turbocharger characteristics,

FIGURE 9 illustrates a compressor performance map for a conventional turbocharger,

FIGURE 10 illustrates a compressor performance map for the turbocharger illustrated in FIGURES 1—8;

FIGURE 11 illustrates a vertical section of the turbocharger illustrated in FIGURES 1—8 mounted on a "V" engine;

FIGURE 12 is a top plan view of the assembly illustrated in FIGURE 12;

FIGURE 13 illustrates a vertical section of the turbocharger of FIGURES 1—8 mounted on an inline engine;

FIGURE 14 is a top plan view of the assembly illustrated in FIGURE 14.

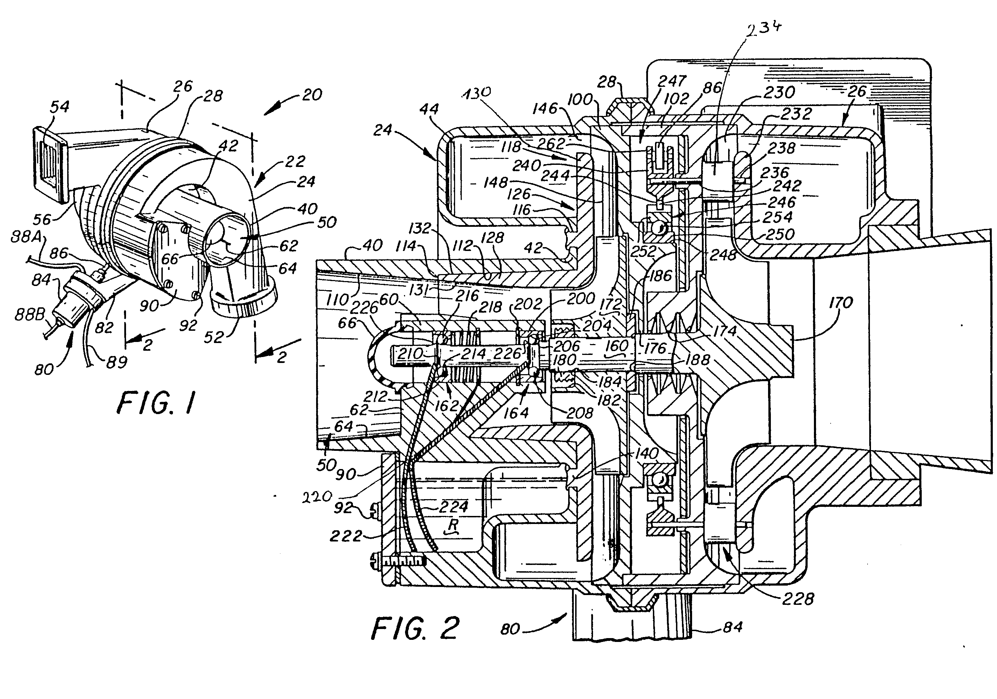

FIGURE 1 is a perspective view of a turbocharger 20 embodying the present invention which turbocharger is described in detail in European Patent Application EP—A—30,230 which is the parent application of the present application. The turbocharger includes an outer structure 22 consisting of a compressor housing unit 24 coupled to a turbine housing unit 26 by a V-clamp band 28.

Referring to FIGURES 1 and 2, compressor housing unit 24 includes a tubular inlet port 40 with a transverse wall 42 attached to one end of port 40 and extending outwardly therefrom. A circumferential chamber 44 is attached from wall 42. Inlet port 40 defines a compressor air inlet 50 and circumferential chamber 44 defines a compressor exhaust 52. Turbine housing 26 defines a turbine air inlet 54 and a turbine exhaust 56.

In operation of the turbocharger, air is drawn into inlet 50 and compressed air is discharged from exhaust 52 to an internal combustion engine to which the turbocharger is mounted. Exhaust air from the engine is channeled into turbine air inlet 54 to drive the turbocharger turbine and is exhausted through turbine exhaust 56.

Referring still to FIGURES 1 and 2, a bearing support cylinder 60 is mounted within inlet port 40 by a plurality of vanes 62 extending from the inside wall surface 64 of inlet port 40. A cap 66 is mounted over the end of support cylinder 60. A piston type actuator 80 is mounted by bracket 82 (FIGRE 1) to turbine housing 26. Actuator 80 includes a controller 84 operated to extend and retract control rod 86 as will be discussed hereinafter in greater detail (the controller is described in co-pending European Patent Application EP—A—111,781 which is also a divisional application of European Patent Application EP—A—30,230). Air lines 88 and 89 provide air to controller 84 as necessary to operate rod 86. An oil reservoir cover plate 90 is attached to compressor housing unit 24 by a plurality of screws 92.

Referring specifically to FIGURE 2, a compressor backwall 100 and a turbine backwall 102 are positioned intermediate of compressor housing unit 24 and turbine housing unit 26 when these two units are assembled. These four components are piloted one to another and held in assembly by V-clamp 28. As can be appreciated from a close review of FIGURE 2, only a single V-clamp is required to hold the entire assembly together. As previously described, compressor housing unit 24 includes a tubular inlet port 40 with a transverse wall 42 attached to one end thereof to one of the inlet ports and extending outwardly therefrom. A circumferential chamber 44 is attached to the end of wall 42 remote from inlet port 40 and has a varying area around its circumference increasing to the discharge provided by compressor exhaust 52 (FIGURE 1).

Inlet port 40 has a first inside wall portion 110 having a converging diameter toward wall 42 and a second inside wall portion 112 joined to first inside wall portion 110 by a step 114. The second inside wall portion 112 has a diverging diameter toward wall 42. Wall 42 has a plurality of circumferentially spaced apertures 116 therethrough. Chamber 44 has an opening 118 substantially in the plane of wall 42 in addition to compressor exhaust 52.

A forward compressor wall insert 126 includes a tubular throat 128 and a circular disc 130 attached transversely from one end of throat 128. Throat 128 has an inside wall surface 131 having a diameter converging toward disc 130 and an outer surface 132 having a diameter diverging toward disc 130. The diverging diameter surface 132 corresponds to the diverging surface of inside wall portion 112 of inlet port 40 such that throat 128 may be inserted within and mated with inlet port 40. The converging diameter inside wall surface 131 of throat 128 corresponds to the extension of converging diameter of first inside wall portion 110 of inlet port 40. When insert 126 is mated into inlet port 40, a continuous converging diameter is provided from the inlet of port 40 inwardly into the turbocharger.

A plurality of rivet-like protrusions 140 extend from disc 130 and correspond to apertures 116 in wall 42. With the insert engaged to compressor housing 24 with the end of throat 128 engaging step 114 of inlet port 40, protrusions 140 are engaged through apertures 116 with disc 130 abutting the corresponding surface of wall 42. As is shown in FIGURE 2, protrusions 140 have been inserted into apertures 116 and the heads thereof deformed to attach insert 126 to housing 24. Disc 130 extends beyond wall 42 to partially cover opening 118 of chamber 44. A circumferential gap 146 is formed between the outer tip of disc 130 and the wall of chamber 44, and a diffuser area 148 is formed between disc 130 and compressor backwall 100 between centrifugal flow compressor rotor 172 and gap 146 leading to chamber 44.

Referring still to FIGURE 2, bearing support cylinder 60 is supported concentrically within inlet port 40 by a plurality of vanes 62 extending inwardly from wall surface 64 of port 40. Turbocharger 20 further includes a shaft 160 supported for rotation in bearing support cylinder 60 by two ball bearing assemblies 162 and 164. A radial flow turbine rotor 170 is mounted at one end of shaft 160 and a centrifugal flow compressor rotor 172 is mounted intermediate of turbine rotor 170 and bearing assemblies 162 and 164. Shaft 160 passes through apertue 176 in compressor backwall 100 and labyrinth seal 174 in turbine backwall 102.

Turbine rotor 170 is fixedly attached to shaft 160, such as by welding, and compressor rotor 172 is retained in position on shaft 160 by retainer nut 180. Compressor rotor 172 is drilled to receive shaft 160 and counterbored to form a bore 182. Bore 182 has a diameter larger than the outer diameter of retainer nut 180 such that retainer nut 180 may be pressed onto shaft 160 into engagement with the bottom wall 184 of bore 182 to retain the compressor rotor in position on shaft 160 as described in co-pending European Patent Application EP—A—111,782 which is also a divisional application of European Patent Application EP—A—30,230. A compressor rotor shim 186 is positioned between compressor rotor 172 and a step 188 in shaft 160 to accurately position the compressor rotor in the axial direction.

A ring 200 is fitted within the end of cylinder 60 adjacent compressor rotor 172 and is prevented from moving into cylinder 60 by a retaining ring 202 attached to cylinder 60. Outer raceway 204 of bearing assembly 164 is formed in ring 200, the inner raceway 206 being integrally formed in shaft 160. Balls 208 are engaged between the inner and outer raceways to form bearing assembly 164.

Bearing assembly 162 includes inner raceway 210 formed integrally in shaft 160 and an outer ring 212 slidable within cylinder 60 with an outer raceway 214 formed therein for receiving balls 216. A compression spring 218 is engaged between ring 212 and a retaining ring 220 fixed within cylinder 60 and biases ring 212 outwardly to fix the position of balls 216 and 208 in bearing assemblies 162 and 164, respectively, thereby fixing the position of shaft 160.

The outer raceway 204 is formed in ring 200 with the ball radius on only one side. Thus, the assembly of bearing assembly 164 is made by positioning a full complement of balls 208 in raceway 206, and engaging ring 200 therearound. Similarly, outer raceway 214 is formed in ring 212 with the ball radius on only one side. Balls 216 of bearing assembly 162 are assembled by moving outer ring 212 to compress spring 218 and inserting a full complement of balls 216 in raceway 214 of shaft 160. By releasing ring 212, spring 218 automatically forces the ring into engagement with balls 216 to form bearing assembly 162 while simultaneously engaging ring 200 against balls 208 of bearing assembly 164.

Alternatively, less than a full complement of balls 208 and 216 may be used in bearing assemblies 162 and 164 by the use of an appropriate retainer. Depending upon the application, an oil impregnated retainer or a sacrificial retainer which replenishes a self-lubricating coating to the balls may be used. The mounting of shaft 160 within cylinder 60 is completed by the engagement of cap 66 on the end of cylinder 60 to close the opening in cylinder 60 remote from compressor rotor 172.

In connection with the bearing arrangement it is referred to co-pending European Patent Application EP—A—121,670 which is also a divisional application of European Patent Application EP—A—30,230.

The use in the present bearing system of the ball bearing arrangement employing integral inner raceways permits a larger diameter shaft and thus provides a very "stiff" shaft. Additionally this bearing arrangement provides a very tight bearing system permitting very little radial or axial movement. As a result, the present bearing system substantially reduces the clearance required between the compressor and turbine and surrounding housing, and concentricity problems are minimized.

In a preferred embodiment of the invention, bearing assemblies 162 and 164 are "starved" of oil. The only lubrication provided to the bearing assemblies is through wicks 222 and 224 which transfer oil from a reservoir R by capillary action to ramps or slingers 226. Oil supplied to slingers 226 is projected by centrifugal force to bearing assemblies 162 and 164 during rotation of shaft 160.

In this way, the use of engine oil as a lubricant for the turbocharger bearings, and the associated plumbing and seals are eliminated. Moreover, the failures resulting from the use of contaminated engine oil as a lubricant or the lack of engine oil during starts is avoided. Moreover, no oil seals are required and bearing failure resulting from the failure of seals is also eliminated.

Alternatively, the bearing assemblies may be permanently lubricated with a heavy consistency oil or grease which is packed into the raceways and around the balls of the bearing assemblies. As another alternative an oil impregnated phenolic retainer may be used to provide lubricant to the balls for a considerable period. In either of these cases, the need for wicks 222 and 224 and slingers 226 would be eliminated although with a reduced bearing life.

In conventional turbochargers where journal bearings and disc type thrust bearings are employed, continuous lubrication of the bearings is required. Additionally, because the turbine is subjected to temperature up to 871°C (1600°F), where the bearings are adjacent the turbocharger turbine, continuous lubrication is required to sufficiently cool the bearings to prevent failure through overheating. Even ball bearings would require a continuous flow of oil for cooling. The ability of the present system to successfully function without conventional flood lubrication used to both lubricate and cool the bearings is the result of the particular arrangement of the type of bearings used and the relative location of the bearings to the compressor and turbine.

As will be described hereinafter in greater detail, because the bearing arrangement eliminates the need for a continuous flow of oil for bearing lubrication and cooling, the present turbocharger may be mounted at any desired orientation. In contrast, conventional turbochargers have been severely limited as to their possible orientation.

In the turbocharger described, the journal and disc bearings of conventional turbochargers are replaced by the more precise ball type bearing assemblies, thereby eliminating the need for a continuous flow of lubrication for the bearings. Additionally, both the compressor and the turbine of the present turbocharger are overhung to one side of the bearing assemblies, and the turbine is maximally removed from the bearing assemblies with the compressor positioned between the bearing assemblies and the turbine. As this arrangement provides sufficient thermal insulation between the turbine and the bearing assemblies, the bearings will not be sufficiently heated as to require conventional lubrication methods.

The back to back compressor/turbine arrangement not only reduces substantially the heat conducted to the bearing assemblies but also minimizes the thermal expansion effects, thereby lowering the blade tip clearances required. This arrangement further eliminates the conventional bearing housing and provides a more compact package than present straddle mounted rotors having the support bearings intermediate of the compressor and turbine.

Additionally, the use of antifriction ball bearing assemblies 162 and 164 provides much better control over the radial and axial movement of the compressor and turbine, thereby allowing reduced blade tip clearance. This in turn appreciably improves the compressor and turbine efficiency. Compared to journal bearings, the use of the antifriction ball bearing assemblies 162 and 164 also reduces the turbine work required to drive the bearings. This in turn reduces the engine back pressure resulting in the improvement of the specific fuel consumption as well as enhancing the ability to accelerate the rotor.-

The present turbocharger also provides for a nozzle area control structure 228 for selectively varying the turbine nozzle area to control the speed or pressure output of the turbocharger. Referring to FIGURES 1 and 2, exhaust gas from the internal· combustion engine on which the turbocharger is mounted is injected into the turbocharger through turbine air inlet 54 and channeled against the blades of turbine rotor 170 through a nozzle area 230 formed by turbine backwall 102, a wall 232 parallel thereto and the nozzle vanes 234. This nozzle area is controlled by structure 228 including a plurality of movable nozzle vanes 234 positioned circumferentially about the nozzle area and rotatable to vary flow velocity and angle of exhaust gas to turbine rotor 170. The vanes 234 include trunnions 236 and 238 extending from opposite sides thereof. Trunnion 236 extends through turbine backwall 102 and is attached to actuation lever 240. Trunnion 238 extends into wall 232.

A nipple 242 is formed on one end of each actuation lever. These nipples extend into radial slots 244 formed in a control ring 246. Control ring 246 and actuation levers 240 are situated in air space gap 247 intermediate of compressor rotor 172 and turbine rotor 170. Control ring 246 is concentrically positioned about the axis of shaft 160 and is received on a cylindrical surface 248 extending from compressor backwall 100.

The control ring 246 includes an inner ring 250 and an outer ring 252 formed with an inner and outer raceway, respectively, for receiving a plurality of balls 254 therebetween. Inner ring 250 is fixedly attached to the cylindrical surface 248 extending from compressor backwall 100, and outer ring 252 rotates angularly relative to the inner ring. By the rotation of outer ring 252, each of the actuation levers 240 is rotated about the axes of trunnions 236 and 238, resulting in the simultaneous rotation of each nozzle vane 234. One of the actuation levers 240 is provided with an extension 262. Control rod 86 is attached to the end of extension 262 remote from nipple 242. By the movement of control rod 86, actuation lever 240 is pivoted to angularly rotate outer ring 252 of control ring 246 thereby rotating each of the other actuation levers 240 and nozzle vanes 234 attached thereto.

Controller 84 is designed to extend control rod 86 to open nozzle vanes 234 to turbine rotor 170 at low and high manifold pressures and to retract control rod 86 to close these nozzle-vanes at intermediate pressures. More specifically, while operating at a closed throttle position where the intake manifold is under a vacuum condition, for example with manifold pressure of $3.45 \cdot 10^4$ to $5.5 \cdot 10^4$ Pa (5 to 8 pounds per square inch absolute), the controller operates to extend rod 86 to open nozzle vanes 234 permitting the engine to operate with as little back pressure as possible.

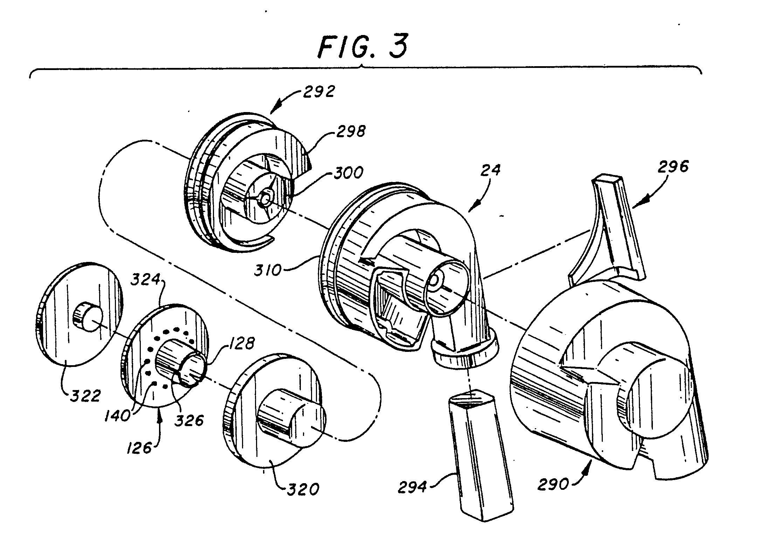

FIGURE 3 illustrates compressor housing unit 24 and forward compressor wall insert 126 and their respective molds used in die-casting these two pieces. Heretofore, the compressor housing portion of many turbochargers have been sand-cast so that the circumferential chamber in which compressed air is directed for channeling to the intake manifold of the engine with which the turbocharger is used, could be formed with a substantially enclosed configuration having a narrow circumferential gap for receiving compressed air therein, thereby allowing the formation of a diffuser. Forming the compressor housing unit in one piece by sand-casting is substantially more expensive and produces a less accurate structure with much rougher wall surfaces in the circumferential chamber than a comparable die-cast unit. However, where the turbocharger compressor housing has been die-cast in the past, it has not been possible to produce the forward diffuser wall as is possible in a sand-casting because of the necessity of providing proper ingress and egress for the die-cast molds.

The present invention provides a two component die-cast compressor housing unit which upon assembly provides the advantages heretofore only afforded by a sand-cast unit. As is shown in FIGURE 3, compressor housing unit 24 is formed by using an outer mold 290, an inner mold 292, a core mold 294 and a cap mold 296. Referring still to FIGURE 3, mold 292 is formed with raised contour 298 to form circumferential chamber 44. Mold 292 also has a protrusion 300 for mating with a corresponding protrusion from mold 290 for forming inlet port 40, vanes 62 and bearing support cylinder 60. Core mold 294 and cap mold 296 are used to form compressor exhaust 52.

As can be seen in FIGURE 3, molds 290, 292, 294 and 296 cooperate to make possible the die-casting of compressor housing unit 24. Molds 290 and 292 are constructed with abutting surfaces to form parting line 310 on housing unit 24.

Molds 320 and 322 cooperate to produce forward compressor wall insert 126. Molds 320 and 322 have abutting surfaces which engage one another to produce insert 126 with a parting line 324 on the outer edge of disc 130. As can best be seen in FIGURE 3, throat 128 is formed with notches 326 which receive vanes 62 when insert 126 is mounted into housing unit 24.

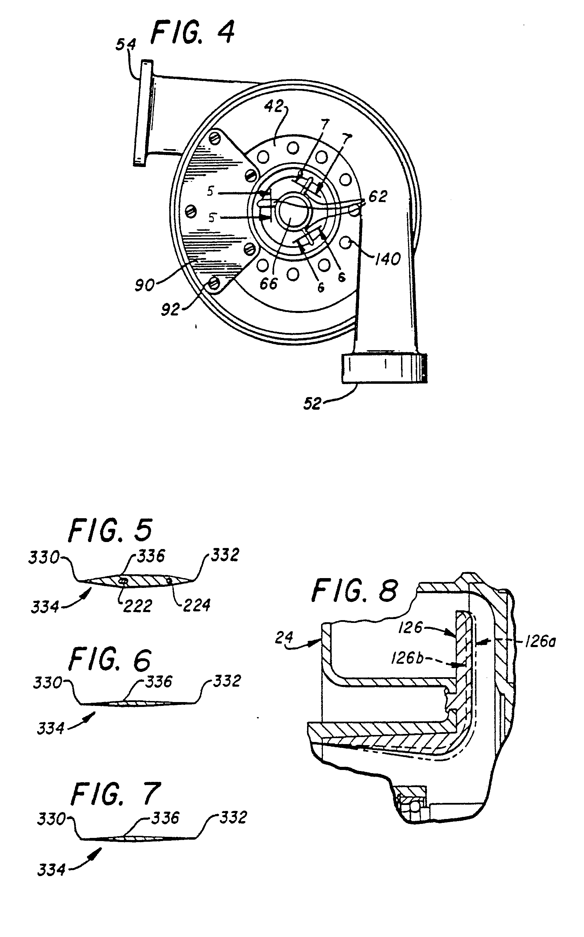

FIGURE 4, and section views 5, 6 and 7, illustrate the positioning and configuration of vanes 62. Referring to FIGURES 5, 6 and 7, each of the vanes 62 has a leading edge 330 and a trailing edge 332 with a thicker intermediate midsection 334. In each case, the thickest midsection is that indicated by a line 336 defining the parting line between molds 290 and 292 used in the formation of housing unit 24. Thus, vanes 62 may be formed by die-casting using molds 290 and 292 to produce the desired airfoil configuration of a leading and trailing edge separated by a thicker midsection therebetween. This configuration, shown in FIGURES 5, 6 and 7, greatly facilitates the ingress of air into the compressor inlet area, and in the configuration of the present invention, may be cast using well known die-casting techniques.

To accomplish an airfoil configuration for struts 62 such that the vanes taper from a thicker midsection to thinner leading and trailing edges, the die-cast molds must be inserted into inlet port 40 from both the forward and rearward ends. Thus, referring to FIGURE 3, the second inside wall portion 112 (FIGURE 2) is formed by protrusion 300 of mold 292 while first inside wall portion 110 (FIGURE 2) is formed by mold 290. Both the first and second inside wall portions 110 and 112, respectively, diverge outwardly to permit removal of the die-cast mold after formation of the piece.

Thus, the formation of the desired geometry of struts 62 requires a diverging diameter wall portion 112 in inlet port 40 to permit a removal of the die-cast molds. However, it is critical to have a continuously converging diameter from the inlet of inlet port 40 to the compressor rotor 172. This is accomplished by use of wall insert 126. Wall insert 126 is formed, also by die-casting, with a diverging surface of inside wall portion 112 of inlet port 40 for mating therewith. Inside wall surface 131 of throat 128 is formed with a diameter converging toward disc 130 corresponding to the extension of the converging diameter of first inside wall portion 110 of inlet port 40. Thus, when insert 126 is mated with inlet port 40, a continuous converging diameter is provided from the inlet of port 40 inwardly to compressor rotor 172 (FIGURE 2).

Thus, the present invention provides a two-piece structure for forming the compressor housing for a turbocharger, both of which may be die-cast. Upon assembly, these two components produce a compressor housing having a plurality of struts 62 supporting a bearing support cylinder 60 with the vanes having a thicker intermediate section converging to a thinner leading edge and to a thinner trailing edge. The housing further provides a continuously converting inlet nozzle from the inlet of the inlet port to the compressor rotor. Further, the compressor housing provides a forward diffuser wall for completing the circumferential chamber in which compressed gases are channeled to the compressor exhaust.

FIGURE 8 shows an adaptation of the invention illustrated in FIGURE 2 wherein differing geometries of wall inserts 126 may be substituted one for the other for use with corresponding compressor rotors. Referring to FIGURE 8, wall insert 126a provides a more restrictive air flow into the turbocharger while wall insert 126b provides for a larger compressor rotor and greater air flow into the turbocharger. It will be now appreciated that modification of the design of the present invention may be accomplished by merely fitting differing wall inserts 126 to a standard compressor housing unit 24. Thus, several different turbochargers, having different flow capabilities, may be produced from the present invention using a standard compressor housing unit 24 by selecting one of any number of possible geometries for wall insert 126 with corresponding compressor wheels. This feature is significant in that wall insert 126 is the simpler component of the compressor housing unit.

In prior art turbocharger units, either of the die-cast or sand-cast variety, any modifications would involve producing a totally new casting for each new design. In the present invention, a different air flow/pressure ratio compressor design is achieved by simply substituting a wall insert of a different design in conjunction with a new or modified compressor wheel.

Therefore, the present invention provides a turbocharger compressor housing unit which may be die-cast. The compressor rotor housing unit includes a compressor housing and forward wall insert for engagement with the housing. This two component construction permits each of the two components to be die-cast using standard die-casting techniques. In their combined configuration, a compressor housing is produced having a circumferential chamber closed on all sides except for a circumferential gap for receiving compressed gases from the compressor rotor. A circumferential passageway is also provided leading to this gap to the chamber wherein accelerated gases are diffused to increase static pressure.

Moreover, a compressor bearing support cylinder is cast concentric with the inlet port and supported therein by a plurality of vanes extending from the inner wall of the inlet port. The vanes are formed with a leading and trailing edge separated by a thicker midsection. This is accomplished through the use of molds having a parting line substantially at the thicker cross sectional area to permit die-casting of the compressor housing.

While the present invention of die-casting a compressor housing unit in two components has been applied to a turbocharger wherein the compressor rotor and turbine rotor are overhung to one side of and supported from a shaft rotatable on ball bearing assemblies, it will be apparent to one skilled in the art that the present invention may readily be adapted to turbochargers of the conventional design having the compressor rotor and turbine rotor supported on opposite sides of shaft bearing support assemblies. In this particular application, the heretofore described compressor housing unit would be directly usable with only modification of the bearing support cylinder.

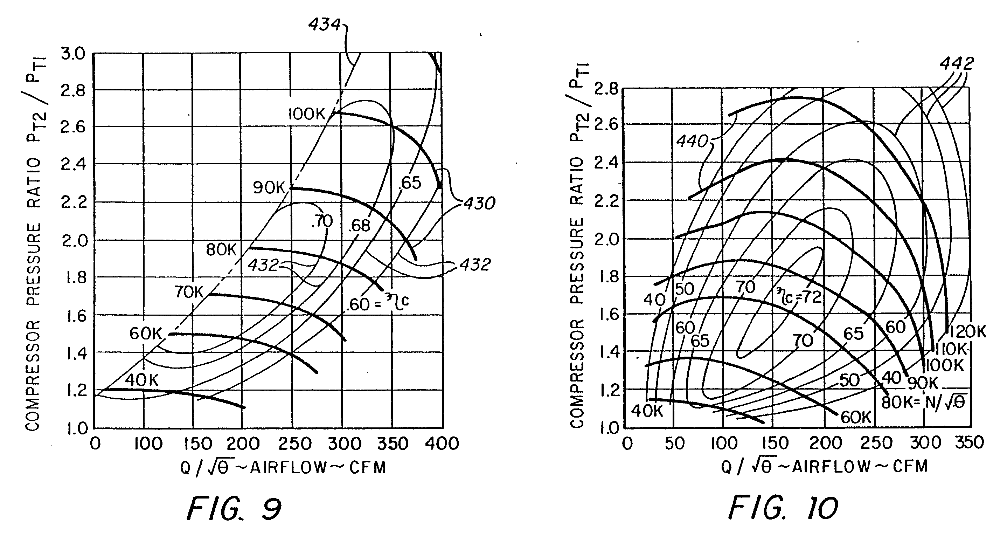

A critical feature of the present turbocharger is its capability of performing over an extremely wide range of compressor speeds and flows without experiencing a "surge line" commonly encountered in conventional turbochargers. This highly significant feature is demonstrated by reference to the performance graphs, known as "compressor maps", illustrated in FIGURES 9 and 10. FIGURE 9 illustrates a typical compressor map for a conventional turbocharger, while FIGURE 10 illustrates a compressor map for the turbocharger of the present invention. These maps plot air flow in cubic feet per minute versus the ratio of discharge pressure to inlet pressure for the turbocharger compressor.

Referring to FIGURE 9, constant compressor speed lines 430 and isentropic efficiency lines 432 are shown. A surge line 434 identifies the performance points to the left of which the turbocharger compressor cannot operate to produce a uniform output of air. While the components of the turbocharger may be modified such that the surge line is shifted toward the vertical axis to provide for stable operation at lower turbocharger speeds, and thus lower engine speeds, such a shifting of the operating characteristics of the turbocharger reduces the high speed capabilities of the unit. Therefore, turbochargers have heretofore been relegated to providing increased performance at only higher engine speeds.

The present turbocharger is capable of producing a uniform output at very low turbocharger air flows and effectively eliminates the surge line limitation encountered in conventional turbochargers. Referring to FIGURE 10, compressor performance map for the present turbocharger is illustrated including constant compressor speed lines 440 and efficiency lines 442.

As can be appreciated by viewing the compressor map illustrated in FIGURE 10, the compressor the present turbocharger continues to operate with no irregularity in compressor output to very low air flow values. Effectively, the present turbocharger does not experience a "surge line" corresponding to that illustrated in the compressor map of FIGURE 9.

Referring to FIGURES 9 and 10, the breadth of the operating range of the conventional turbocharger may be compared with that of the present turbocharger. Referring specifically to FIGURE 9, at a compressor pressure ratio of 1.9, the air flow varies from a high of 595 m³/h (350) at an efficiency of 60% to a low of 340 m³/h (200 cubic feet per minute) at the surge line. Therefore, this ratio of high to low flow rate 595 divided by 340 is 1.75. Referring to FIGURE 10, at a pressure ratio of 1.9, the present turbocharger operates from a flow rate of 467 m³/h (275) at a 60% efficiency to a low of 102 m³/h (60 cubic feet per minute) without encountering a surge line. The ratio of the high to low flow rate 467 divided by 102 is 4.58, an increase of over two and one-half that of the conventional turbocharger.

This achievement is highly significant in that the turbocharger can be effectively used to improve performance at both lower engine speeds as well as at higher engine speeds. This development becomes even more significant when coupled with the feature of providing a constant compressor speed for varying engine speeds or constant boost at varying engine speeds in that a higher desired pressure ratio may be attained at low engine rpm's without surge or turbulence problems normally experienced at the lower compressor flows in conventional turbochargers.

This significant advancement provided by the present turbocharger is primarily attributable to the compressor air inlet configuration in conjunction with advanced radial flow compressor technology — such as backward swept blading. As has been described, bearing support cylinder 60 is supported within tubular inlet port 40 by a plurality of struts 62 extending from the inside wall of inlet port 40 to the bearing support cylinder 60. In one embodiment, three struts extend from the inside wall of the inlet port to the bearing support cylinder to position the cylinder concentrically within the compressor air inlet. As a result, the inlet is divided into more than one inlet channel. Additionally, these channels are proportionately long in the flow direction compared to any width dimension. Further, the struts have a contour including a leading and trailing edge narrower than an intermediate section of the strut. As is also shown in FIGURE 2, the inside wall portion of inlet port 40 has a converging diameter from the inlet end to the area adjacent compressor rotor 172.

This structure stabilizes the back flow conditions normally encountered at low compressor flows. By stabilizing the back flow conditions, the compressor is able to continue to function to provide a steady state flow of air at much lower compressor flows than heretofore possible in conventional turbochargers.

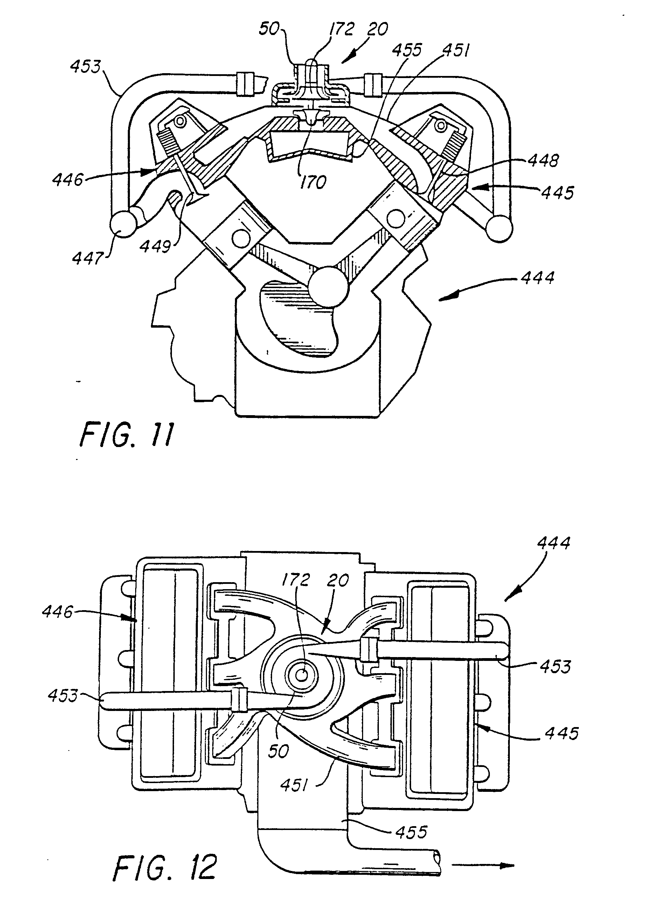

FIGURES 11—14 illustrate a novel way of mounting the turbocharger illustrated in FIGURES 1—8 on an internal combustion engine. FIGURES 11 and 12 illustrate a vertical section view and top plan view, respectively, of turbocharger 20 mounted on a V-6 engine 444. Of course, it will be understood that this same application can be made on a "V" engine of any number of cylinders. Engine 444 represents a conventional V-arrangement engine having a right cylinder bank 445 and a left cylinder bank 446. The section shown in FIGURE 11 illustrates a section through an exhaust valve 448 in the right cylinder bank 445 and through an intake valve 449 on the left cylinder band 446. Turbocharger 20 is mounted with the turbine and compressor rotational axis in a vertical position, an orientation not heretofore possible for conventional turbochargers. Because of the provisions in the present turbocharger for providing oil to the bearing assemblies by way of wicks and the corresponding construction which eliminates the need for a continuous flow of lubricant to the bearings, the present turbocharger may be oriented with the compressor and turbine rotational axis in a true vertical orientation or any angle between vertical and horizontal. By contrast, conventional turbochargers, normally requiring a flow of lubricant to and from the bearing structures, have not been successful in operating in a true vertical orientation.

Referring to FIGURES 11 and 12, engine exhaust is channeled to turbocharger 20 by way of manifold 451 wherein exhaust gases are communicated directly to turbine rotor 170 of turbocharger 20 from each individual exhaust valve. Turbocharger compressor exhaust is fed into the cylinders of engine 444 through manifolds 447 by way of cross over tubes 453 to intake valves 449.

In operation, air is drawn into turbocharger 20 at inlet 50, is compressed by compressor rotor 172, and discharged through tubes 453 to manifolds 447 into the cylinders on both the left and right banks of the engine. Exhaust gas from the engine is delivered by way of manifold 451 to turbine rotor 170 at spaced points therearound and thereafter discharged through exhaust duct 455. This spacing allows the turbine to utilize the high energy pulses created when the exhaust valve first opens.

As can be appreciated from viewing FIGURES 11 and 12, the turbine rotor is mounted in a turbine housing having a circumferential chamber with the variable nozzles therein aligned substantially in a plane perpendicular to the axis of rotation of the turbine rotor. Further, the engine exhaust ports are aligned in a common plane oriented horizontally. As can be seen the normal turbine housing commonly used is replaced by manifold 451 which serves as both exhaust manifold and turbine housing. The ability to use the present turbocharger in a vertical orientation makes possible the alignment of the plane of the exhaust ports substantially parallel to the plane of the circumferential chamber of the turbine housing by positioning the turbine shaft axis substantially perpendicular to the plane of the exhaust ports. In this way, the exhaust gases from the exhaust ports may be more directly and effectively injected to the turbine housing for driving the turbine rotor.

In contrast, prior turbocharger units have required the use of manifolds having extremely complicated designs for directing exhaust gases from the exhaust ports to the turbine rotor. Further, in the present turbocharger, the exahust manifold directs exhaust gases from each of the exhaust ports from the engine to points substantially equally spaced around the turbine rotor, thus communicating exhaust gases to different points about the circumference of the turbine rotor. In this way, the cyclic exhaust pulses from the engine exhaust ports are distributed about the circumference of the turbine rotor to take advantage of these pulses. The vertical orientation of the present turbocharger also makes possible the nesting of the turbocharger between the banks of the cylinders in close proximity to the engine. Further, the exhaust gases may be ported by way of exhaust manifold directly from the cylinders to the turbocharger turbine with very little loss of energy prior to application of the exhaust gases to drive the turbine.

It will be understood that a carburetor may be mounted directly above the turbocharger to feed a fuel air mixture into inlet 50. Likewise, the turbocharger may be used on a fuel injection or diesel engine where fuel is fed directly into the engine cylinders.

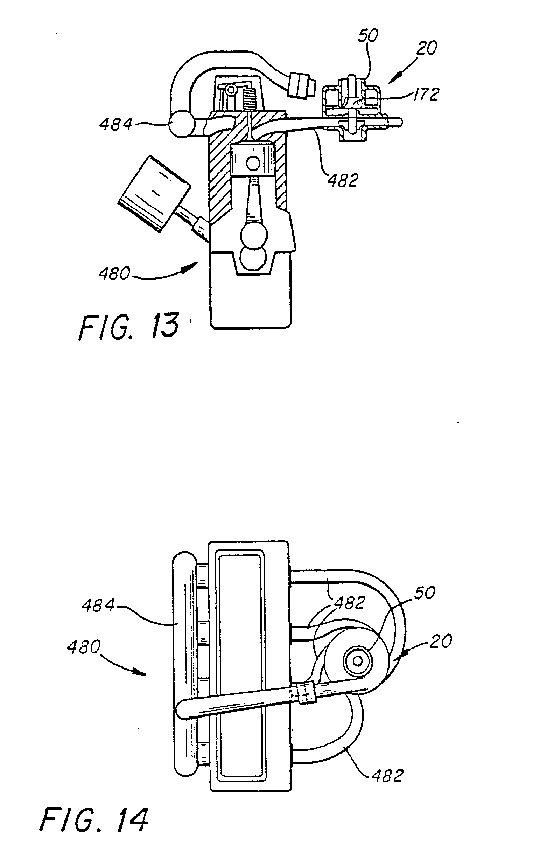

Referring now to FIGURES 13 and 14, the present turbocharger mounted in a vertical position is shown in use on an in-line four cylinder engine. Of course, it will be understood that the present turbocharger can also be used on an in-line engine of more or less than four cylinders. In the embodiment illustrated in FIGURES 13 and 14, turbocharger 20 is connected to engine 480 by way of an exhaust manifold 428 communicating between the exhaust valves of the engine cylinders to the turbocharger turbine. Air is drawn into the turbocharger at inlet 50, compressed by turbocharger compressor rotor 172 and discharged through manifold 484 into the intake valves of the engine cylinders. As can be seen in FIGURE 14, exhaust manifold 482 is formed such that the gases driving the turbocharger turbine are communicated to the turbine at spaced points about the turbine circumference. Further, the manifold is oriented to facilitate rotation of the turbine in a clockwise direction as viewed from FIGURE 14. Similarly, as can be seen from FIGURE 12, a similar manifold arrangement is provided when the turbocharger is mounted intermediate of two banks of cylinders in a V-arrangement engine.

Therefore, the present turbocharger can be oriented with the axis of rotation of the turbine and compressor vertical or at any position intermediate of horizontal and vertical. This is made possible largely because of the provisions for lubricating the bearing structures on which the compressor and turbine shaft rotate. Because the present turbocharger may be so oriented, it is ideally suited for mounting to and use with conventional engines of all types and arrangements.

**Claims**

1. A compressor housing for a turbocharger, with an inlet port (40) and a circumferential chamber (44) surrounding said inlet port (40) and leading to a compressor exhaust port (52) in which housing, in use, a compressor rotor (160) is rotatably mounted for compressing air entering into the inlet port (40) and discharging the compressed air into the chamber (44) for exhaust through the exhaust port (54), the outer housing defining the inlet port (40) and the circumferential chamber (44) around the inlet port (40) and a wall insert (126) includig a tubular throat (128) for engagement within the inlet port (40) and a disc (130) attached transversely at one end of the tubular throat (128), the disc (130) having an aperture corresponding to the opening of the throat (128) characterized by the inlet port (40) having an inside surface with a first portion (110) remote from the disc (130) having varying diameter converging toward the disc (130) and a second portion (112) adjacent the disc (130) diverging in diameter toward the disc (130) and the tubular throat (128) having an inside surface (131) converging in diameter toward the disc (130) and an outside surface (132) diverging in diameter toward the disc (130) the outside surface being arranged to mate with the second portion of the inside surface of the inlet port (40) of the outer housing.

2. The compressor housing according to Claim 1 characterized by means for attaching (140) said insert (126) within said outer housing with said insert forming one wall of the circumferential chamber (44) and forming a circumferential passageway between the aperture and the circumferential chamber (44) for channelling compressed air from the aperture to the chamber (44).

3. The compressor housing according to Claim 1 or Claim 2 characterized by said attachment means comprising rivet protrusions (140) integrally formed and extending from the disc (130) and corresponding to and facing apertures in the wall of the outer housing circumferentially spaced around the inlet port (40), said rivet protrusions (140) being adapted for insertion into said apertures to join said insert (126) to said outer housing.

4. The compressor housing according to one of Claims 1 to 3 characterized by the inside surface (131) of the throat (128) of the wall insert (126) converging along a straight line at substantially the same rate as the first portion (110) of the inlet port inside surface converges to form a continuous converging surface from the end of the inlet port remote from the insert disc to the disc aperture.

5. The compressor housing according to one of Claims 1 to 4 characterized by:
a bearing support cylinder (60); and
a plurality of vanes (62) attached to and extending inwardly from the inside surface of the inlet port (40), said vanes (62) having a leading edge (330) remote from the disc (130) and a trailing edge (332) facing the disc (130), the leading and trailing edges (330, 332) being separated by a thicker intermediate vane section (336), the surfaces of said vanes (62) converging from the thickest intermediate vane section (336) to the leading and trailing edges (330, 332).

6. The compressor housing according to Claim 5 characterized by one end of the tubular throat (128) being notched (326) to correspond with the vanes (62) such that the throat (128) straddles the vanes (62) when the insert (126) is attached to the outer housing.

7. The compressor housing according to Claim 5 or Claim 6 characterized by three vanes (62) which extend substantially radially from said cylinder (60) to the inside wall of the housing, dividing the inlet port (40) into three inlet passages.

8. The compressor housing according to any one of Claims 1 to 7, characterized by the inlet port (40) being connected to the circumferential chamber (44) by a transverse wall (42).

9. The compressor housing according to any one of Claims 1 to 7, characterized by the inlet port diameter being shorter than the length of the inlet port (40).

10. The compressor housing according to any one of Claims 1 to 9, characterized by both the outer housing and the wall insert (126) being die cast.

11. A method of producing a compressor housing according to any one of Claims 1 to 10, comprising
(i) die casting an outer housing (24) using an outer mold (290) having on it a protrusion, an inner mold (292) formed with a raised contour (298) to form the circumferential chamber and having a protrusion (300) for mating with the protrusion on the outer mold for forming the inlet port, a core mold (294), and a cap mold (296) for cooperating with the core mold to form the exhaust port,
(ii) die casting a compressor wall insert (126) using a pair of cooperating molds (320, 322) having abutting surfaces which engage one another to produce the wall insert with a parting line on the outer edge of the wall, and
(iii) attaching said wall insert within said outer housing to form the compressor.

**Patentansprüche**

1. Kompressorgehäuse für eine Turbolader mit einer Einlaßöffnung (40) und einer Umfangskammer (44), die die Einlaßöffnung (40) umgibt und zu einer Kompressorauslaßöffnung (42) führt, in welchem Gehäuse im Gebrauch ein Kompressorrotor (160) zum Komprimieren von in die Einlaßöffnung (40) eintretender Luft und zum Abgeben der komprimierten Luft in die Kammer (44) zur Abgabe durch die Auslaßöffnung (54) drehbar befestigt ist, wobie das äußere Gehäuse die Einlaßöffnung (40) und die Umfangskammer (44) um die Einlaßöffnung (40) und einen Wandeinsatz (126) mit einem rohrförmigen Hals (128) zum Eingriff innerhalb der Einlaßöffnung (40) und eine quer an einem Ende des rohrförmigen Halses (128) angebrachte Scheibe (30) bildet, die Scheibe (130) eine Öffnung entsprechend der Öffnung des Halses (128) hat, dadurch gekennzeichnet, daß die Einlaßöffnung (40) eine von der Scheibe (130) entfernte Innenfläche mit einem inneren Bereich (110) mit sich veränderndem Durchmesser, der zur Scheibe (30) konvergiert, und einen zweiten Bereich (112) benachbart zur Scheibe (130) aufweist, der im Durchmesser zur Scheibe (130) divergiert, und der rohrförmige Hals (128) eine in ihrem Durchmesser zur Scheibe (130) konvergierende Innenfläche (131) und eine im Durchmesser zur Scheibe (130) divergierende Außenfläche (132) hat, wobie die Außenfläche so ausgebildet ist, daß sie an den zweiten Bereich der Innenfläche der Einlaßöffnung (40) des äußeren Gehäuses angepaßt ist.

2. Kompressorgehäuse nach Anspruch 1, gekennzeichnet durch Mittel zur Anbringung (140) des Einsatzes (126) im äußeren Gehäuse, wobei der Einsatz eine Wand der Umfangskammer (44) bildet und einen Umfangskanal zum Führen der kompromierten Luft von der Öffnung zur Kammer (44) zwischen der Öffnung und der Umfangskammer (44) bildet.

3. Kompressorgehäuse nach Anspruch 1 oder 2, dadurch gekennzeichnet, daß die Anbringmittel Nietvorsprünge (140) haben, die einstückig ausgebildet sind un sich von der Scheibe (130) erstrecken und in der Wand des äußeren Gehäuses um Umfang um die Einlaßöffnung (40) im Abstand angeordneten Öffnung entsprechen und diesen zugewandt sind, wobei die Nietvorsprünge (140) in die Öffnungen einsetzbar sind, um den Einsatz (126) mit dem äußeren Gehäuse zu verbinden.

4. Kompressorgehäuse nach einem der Ansprüche 1 bis 3, dadurch gekennzeichnet, daß die Innenfläche (131) des Halses (128) des Wandeinsatzes (126) entlang einer geraden Linie mit im wesentlichen der gleichen Rate wie der erste Bereich (110) der Innenfläche der Einlaßöffnung konvergierend verläuft, um eine kontinuierliche, konvergierende Fläche vom der Einsatscheibe entfernten Ende der Einlaßöffnung zur Scheibenöffnung zu bilden.

5. Kompressorgehäuse nach einem der Ansprüche 1 bis 4, gekennzeichnet durch einen Lagerstützzylinder (60); und mehrer an der Innenfläche der Einlaßöffnung (40) angebrachte und sich von dieser nach innen erstreckende Schaufeln (62), die eine von der Scheibe (130) entfernte Vorderkante (330) und eine der Scheibe (130) zugewandte Hinterkante (332) aufweisen, wobei die vordere und die hintere Kante (330, 332) durch einen dickeren, mittleren Schaufelabschnitt (336) gestrennt sind und die Flächen der Schaufeln (62) vom dicksten mittleren Schaufelabschnitt (336) zur vorderen und zur hinteren Kante (330, 332) konvergieren.

6. Kompressorgehäuse nach Ansprüche 5, dadurch gekennzeichnet, daß ein Ende des rohrförmigen Halses (128) zur Anpassung an die Schaufeln (62) eingeschnitten (326) ist, so daß de Hals (128) die Schaufeln (62) übergreift, wenn der Einsatz (126) am äußeren Gehäuse befestigt ist.

7. Kompressorgehäuse nach Ansprüche 5 oder 6, dadurch gekennzeichnet durch drei Schaufeln (62), die sich im wesentlichen radial vom Zylinder (60) zur inneren Wand des Gehäuses erstrecken und die Einlaßöffnung (40) in drei Eilaßkanäle unterteilen.

8. Kompressorgehäuse nach einem der Ansprüche 1 bis 7, dadurch gekennzeichnet, daß die Einlaßöffnung (40) durch eine Querwand (42) mit der Umfangskammer (44) verbunden ist.

9. Kompressorgehäuse nach einem der Ansprüche 1 bis 7, dadurch gekennzeichnet, daß der Durchmesser der Einlaßöffnung kleiner ist als die Länge der Einlaßöffnung (40).

10. Kompressorgehäuse nach einem der Ansprüche 1 bis 10, dadurch gekennzeichnet, daß sowohl das äußere Gehäuse als auch der Wandeinsatz (126) im Spritzgußverfahren hergestellt sind.

11. Verfahren zur Herstellung eines Kompressorgehäuses gemäß einem der Ansprüche 1 bis 10, umfassend

(i) Spritzgießen eines äußeren Gehäuses (24) unter Verwendung einer äußeren Form (290), die einen Vorsprung aufweiste, einer inneren Form (292), die eine erhöhte Kontur (298) zur Bildung Umfangskammer und einen Vorsprung (300) zur Anpassung an den Vorsprung der äußeren Form zur Bildung der Einlaßöffnung aufweist, einer Kernform (294) und einer Deckform (296) zum Zusammenwirken mit der Kernform zur Bildung der Auslaßöffnung,

(ii) Spritzgießen eines Kompressorwandeinsatzes (126) unter Verwendung eines Paares zusammenwirkender Formen (320, 322) mit aneinander liegenden Flächen, die zur Bildung des Wandeinsatzes mit einer Trennlinie an der Außenkante der Wand in Eingriff miteinander stehen, und

(iii) Abringen des Wandensatzes im Inneren des äußeren Gehäuses zur Bildung des Kompressors.

**Revendications**

1. Carter de compresseur pour turbocompresseur, comprenant un orifice d'entrée (40) et une chambre circonférentielle (44) qui entoure cet orifice d'entrée (40) et conduit à un orifice d'échappement de compresseur (52), un rotor de compresseur (172) étant, en fonctionnement, monté rotatif à l'intérieur de ce carter afin de comprimer de l'air qui pénètre par l'orifice d'entrée (40) et d'évacuer dans la chambre (44) l'air comprimé pour qu'il s'échappe par l'orifice d'échappement (54), un carter extérieur délimitant l'orifice d'entrée (40) et la chambre circonférentielle (44) qui est située autour de cet orifice d'entrée (40), tandis qu'un élément rapporté de paroi (126) comprend une embouchure tubulaire (128) destinée à coppérer avec cet orifice d'entrée (40) et un disque (130) quie est fixé dans le sens transversal à l'une des extrémités de cette embouchure tubulaire (128), ce disque (130) présentant une ouverture correspondante à celle de l'embouchure (128), caractérisé en ce que l'orifice d'entrée (40) présente une surface interne comportant une première partie (110) qui est éloignée du disque (130) et présente un diamètre variable qui converge en direction de ce disque (130) et une seconde partie (112) qui est voisine de ce disque (130) et dont le diamètre diverge en direction de ce même disque (130), tandis que l'embouchure (128) présente une surface interne (131) dont le diamètre converge en direction du disque (130) et une surface externe (132) dont le diamètre diverge en direction de ce disque (130) cette surface externe étant agencée de façon à épouser la forme de la seconde partie de la surface interne de l'orifice d'entrée (40) du carter extérieur.

2. Carter de compresseur suivant la revendication 1, caractérisé par des moyens (140) permettant de fixer l'élément rapporté (126) à l'intérieur du carter extérieur de façon que cet élément rapporté constitue une paroi de la chambre circonférentielle (44) et ménage un passage circonférentiel entre l'ouverture et cette chambre circonférentielle (44) afin de canaliser l'air comprimé depuis cette ouverture jusqu'à cette chambre (44).

3. Carter de compresseur suivant la revendication 1, ou la revendication 2, caractérisé en ce que lesdits moyens de fixation comprennent des saillies en forme de rivets (140) qui sont réalisées venues de matière sur le disque (130) et s'étendent à partir de celui-ci et qui correspondent, en y faisant face, à des ouvertures ménagées dans la paroi du cater extérieur d'une façon espacée dans le sens circonférentiel autour de l'orifice d'entrée (40), ces sailles en forme de rivets (140) pouvent être introduites dans lesdites ouvertures de façon à assembler l'élément rapporté (126) sur le carter extérieur.

4. Carter de compresseur selon l'une des revendications 1 à 3, caractérisé par le fait que la surface interne (131) des l'embouchure (128) de l'élément rapporté de paroi (126) converge le long d'une ligne rectiligne et suivant sensiblement la même allure que celle à laquelle converge la première partie (110) de la surface interne de l'orifice d'entrée, de façon à former une surface convergente continue depuis l'extrémité de l'orifice d'entrée qui est éloigne du disque de l'élément rapporté, jusqu'à l'ouverture de ce disque.

5. Carter de compresseur selon l'une des revendications 1 à 4, caractérisé par un cylindre de support de paliers (60) et par plusieurs ailettes (62) qui sont fixées sur la surface interne de l'orifice d'entrée (40) et s'étendent vers l'intérieur à partir de celle-ci, ces ailettes (62) présentent un bord d'attaque (330) qui est éloigné du disque (130) et un bord de fuite (302) qui est tourné vers ce disque (130), ces bords d'attaque et de fuite (330, 332) étant séparés par une section intermédiaire d'ailette (336) qui est épaisse, les surfaces ces ailettes (62) convergeant depuis cette section intermédiaire d'ailette (336) plus épaisse vers les bords d'attaque et de fuite (330, 332).

6. Carter de compresseur selon la revendication 5, caractérisé par le fait que l'une des extrémités de l'embouchure tubulaire (128) présente des entailles (326) de façon à correspondre aux ailettes (62), de manière que cette embouchure (128) chavauche ces ailettes (62) lorsqu'on fixe l'élément rapporté (126) sur le carter exterieur.

7. Carter de compresseur suivant la revendication 5 ou la revendication 6, caractérisé par trois ailettes (62) qui s'étendent d'une manière sensiblement radiale depuis le cylindre (60) jusqu'à la paroi interne du carter, en divisant l'orifice d'entrée (40) en trois passages d'entrée.

8. Carter de compresseur selon l'une quelconque des revendications 1 à 7, caractérisé par le fait que l'orifice d'entrée (40) est relié à la chmbre circonférentielle (44) par une paroi transversale (42).

9. Carter de compresseur selon l'une quelconque des revendications 1 à 7, caractérisé par le fait que le diamètre de l'orifice d'entrée est plus court que la longueur de cet orifice d'entrée (40).

10. Carter de compresseur selon l'une quelconque des revendicatins 1 à 9, caractérisé par le fait que le carter extérieur et l'élément rapporté (126) sont l'un et l'autre moulés sous pression.

11. Procédé de réalisation d'un carter de compresseur suivant l'une quelconque des revendications 1 à 10, consistant:

(i) à mouler sous pression un carter extérieur (24) en utilisant un moule extérieur (290) sur lequel est ménagée une partie en saillie, un moule intérieur (292) qui est réalisé avec un profil surélevé (298) permettant de former la chambre circonférentielle et présentant une partie en saille (300) destinée à s'adapter à la partie en saillie du moule extérieur de façon à réaliser l'orifice d'entrée, un noyau de moulage (294) et un couvercle de moulage (296) destinée à coopérer avec ce noyau de moulage pour réaliser l'orifice d'échappement,

(ii) à moules sous pression un élément rapporté de paroi de compresseur (126) en utilisant deux moules coopérants (320, 322) qui présentent des surfaces venant en butée et qui coopérent l'une avec l'autre pour produire l'élément rapporté de paroi avec une ligne de joint située sur la tranche extérieur de cette paroi, et

(iii) à fixer l'élément rapporté de paroi à l'intérieur du carter extérieur de façon à former le compresseur.

FIG. 1

FIG. 2

0 122 328

## FIG. 3

0 122 328

FIG. 4

FIG. 5

FIG. 6

FIG. 7

FIG. 8

FIG. 10

FIG. 9

4

FIG. 11

FIG. 12

FIG. 13

FIG. 14